# EUROPEAN PATENT SPECIFICATION

(11) **EP 4 563 461 B1**
(45) Date of publication and mention of the grant of the patent: **20.05.2026**
(21) Application number: 24213099.5
(22) Date of filing: 14.11.2024
(51) Int. Cl.: B63H 20/32, B63H 21/17

(54) **SHIP PROPULSION MACHINE**
SCHIFFSANTRIEBSMASCHINE
MACHINE DE PROPULSION DE NAVIRE

(30) Priority: 15.11.2023 JP 2023194305
(43) Date of publication of application: 04.06.2025
(73) Proprietor: Suzuki Motor Corporation, Shizuoka 432-8611 (JP)
(72) Inventor: ITO, Jun, Hamamatsu-shi, 432-8611 (JP); MATSUMOTO, Shingo, Hamamatsu-shi, 432-8611 (JP)
(74) Representative: Haseltine Lake Kempner LLP

(56) References cited:
- JP-A- 2005 153 727
- JP-A- 2023 144 498
- US-A1- 2022 089 261

## Description

### TECHNICAL FIELD

The present disclosure relates to a ship propulsion machine using a motor (electric motor) as a power source to propel a ship.

### BACKGROUND ART

JP2005-153727A (Patent Literature 1) describes an electric outboard motor. In the outboard motor, a motor as a power source to propel a ship is provided in an upper portion of the outboard motor, and a propeller shaft to which a propeller is fixed is provided in a lower portion of the outboard motor. In addition, a drive shaft extending vertically is provided between the motor and the propeller shaft, and power of the motor is transmitted to the propeller shaft via the drive shaft.

US 2022/089261 A1 (Patent Literature 2) describes a supporting structure for an outboard engine. The supporting structure includes an adapter plate for supporting an electric motor having an output shaft for outboard propulsion. Further, the adapter plate supports an inverter for driving the electric motor.

In electric ship propulsion machines, an AC motor is often used as a power source to propel a ship. In addition, when an AC motor is used, an inverter that converts direct current from the battery into alternating current is used as a control unit for driving the AC motor. In the related art, the inverter is provided in the upper portion of the outboard motor and arranged near the motor.
Patent Literature 1: JP2005-153727A
Patent Literature 2: US 2022/089261 A1

### SUMMARY OF INVENTION

In the electric outboard motor shown in FIG. 2 of JP2005-153727A, a motor cover is provided at the upper portion of the outboard motor, and a motor and a control unit for controlling the number of rotations of the motor are provided within the motor cover. In the outboard motor, the motor and the control unit are distributed and supported at different locations on the bottom portion of the motor cover.

In an electric ship propulsion machine, when the arrangement method of the motor and the control unit shown in FIG. 2 of JP2005-153727A is adopted, and the motor and the inverter are distributed and supported on the bottom portion of the motor cover, the following problems may arise.

The inverter that drives the AC motor, which is a power source to propel a ship, includes a power semiconductor that handles a large current and a heat dissipation mechanism that dissipates heat generated from the power semiconductor, or a cooling mechanism that cools the power semiconductor. For this reason, the inverter that drives the AC motor, which is a power source to propel a ship, is larger in volume and heavier than inverters used in household electrical appliances.

Therefore, when the motor and the inverter are distributed and supported on the bottom portion of the motor cover, it will result in distributing and supporting the two large-volume devices on the bottom portion of the motor cover, which may lead to an increase in the size of the motor cover and, consequently, the ship propulsion machine.

In addition, when the motor and the inverter are distributed and supported on the bottom portion of the motor cover, it will result in distributing and supporting the two heavy devices on the bottom portion of the motor cover. For this reason, to secure sufficient strength to support the motor and the inverter, it becomes necessary to provide the bottom portion of the motor cover with, for example, a large, high-rigidity base or pedestal having a wide attachment area where the motor and the inverter can be distributed and arranged, resulting in an increase in the size of the motor cover and, consequently, the ship propulsion machine.

The present disclosure has been made in view of the circumstances as described above, and an object of the present disclosure is to provide a ship propulsion machine that can suppress an increase in size of the ship propulsion machine while ensuring sufficient support strength for a motor and an inverter.

The present disclosure provides a ship propulsion machine including: a motor; an inverter configured to generate a driving current for controlling drive of the motor; a propeller; and a power transmission mechanism configured to transmit power of the motor to the propeller. The motor includes: a motor shaft; a rotor; a stator; a motor housing in which the motor shaft, the rotor, and the stator provided are housed; a lower motor bracket to which a lower portion of the motor housing is fixed; and an upper motor bracket to which an upper portion of the motor housing is fixed. A lower portion of the inverter is attached to the lower motor bracket, and an upper portion of the inverter is attached to the upper motor bracket.

According to the present disclosure, it is possible to suppress an increase in size of a ship propulsion machine while ensuring sufficient support strength for a motor and an inverter.

### BRIEF DESCRIPTION OF DRAWINGS

The present disclosure will be described in detail based on the following without being limited thereto, wherein:
FIG. 1 is an overall view showing an outboard motor of a first embodiment of the present disclosure;
FIG. 2 is a perspective view showing a motor unit and a motor holder in the outboard motor of the first embodiment of the present disclosure;
FIG. 3 is an explanatory view showing a state of the motor unit and the motor holder in FIG. 2, as viewed from the left;
FIG. 4 is an explanatory view showing a state of the motor unit and the motor holder in FIG. 2, as viewed from above;
FIG. 5 is an explanatory view showing a state of the motor unit and the motor holder in FIG. 2, as viewed from the rear;
FIG. 6 is an overall view showing an outboard motor of a second embodiment of the present disclosure;
FIG. 7 is a perspective view showing a motor unit and a motor holder in the outboard motor of the second embodiment of the present disclosure;
FIG. 8 is an explanatory view showing a state of the motor unit and the motor holder in FIG. 7, as viewed from the left;
FIG. 9A is a cross-sectional view taken along cutting line IX-IX in FIG. 8, showing a section between a first motor unit and a second motor unit, as viewed from above, and FIG. 9B is an explanatory view showing a configuration of a power switching mechanism in FIG. 8; and
FIG. 10 is an explanatory view showing an assembly method of the outboard motor of the second embodiment of the present disclosure.

### DESCRIPTION OF EMBODIMENTS

A ship propulsion machine of an embodiment of the present disclosure includes a motor, an inverter that generates a drive current for controlling drive of the motor, a propeller, and a power transmission mechanism that transmits power of the motor to the propeller.

In addition, the motor includes a motor shaft, a rotor, a stator, a motor housing having the motor shaft, the rotor, and the stator provided therein, a lower motor bracket to which a lower portion of the motor housing is fixed, and an upper motor bracket to which an upper portion of the motor housing is fixed.

Additionally, a lower portion of the inverter is attached to the lower motor bracket, and an upper portion of the inverter is attached to the upper motor bracket.

According to the ship propulsion machine of the embodiment of the present disclosure, the inverter can be attached to the lower motor bracket and upper motor bracket of the motor, and the motor with the inverter attached can be attached to, for example, a motor holder provided on a bottom portion of a motor cover at an upper portion of the ship propulsion machine. In this case, the motor is supported directly by the motor holder, and the inverter is supported by the motor holder via the motor. This allows the motor and the inverter to be concentratedly arranged within a small area. Therefore, it is possible to suppress an increase in size of the ship propulsion machine.

In addition, since the configuration is such that the motor with the inverter attached is attached to the motor holder, an area that needs to be secured in the motor holder when supporting the motor and the inverter by the motor holder may only need to be an area required for attaching the motor. Therefore, the motor holder does not need to be increased in size. Therefore, it is possible to suppress the ship propulsion machine from becoming larger due to an increase in size of the motor holder.

Additionally, the inverter can be firmly supported by the motor by attaching the inverter to two motor brackets spaced vertically apart from each other.

In addition, basically, the motor housing, the lower motor bracket, and the upper motor bracket have high rigidity to prevent axial misalignment of the motor shaft and the rotor. Additionally, the motor is firmly attached to the motor holder to prevent positional misalignment of the motor shaft, or the like. Additionally, the motor holder has high rigidity to firmly support the high-speed rotating motor. Therefore, by attaching to the motor holder the motor with the inverter attached, it is possible to firmly support the inverter by the motor holder via the motor.

According to the ship propulsion machine of the embodiment of the present disclosure, it is possible to suppress an increase in size of a ship propulsion machine while ensuring sufficient support strength for a motor and an inverter.

### (First Embodiment)

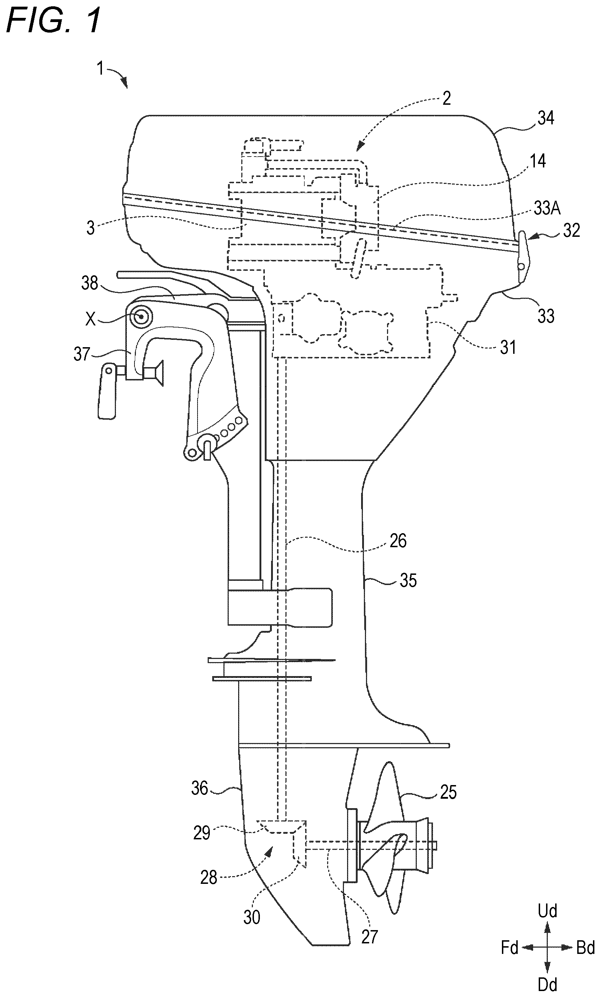

A first embodiment of a ship propulsion machine of the present disclosure will be described with reference to FIGS. 1 to 5. In the description of the present embodiment, when referring to upper (Ud), lower (Dd), front (Fd), rear (Bd), left (Ld), and right (Rd) directions, they follow arrows drawn at the lower right in each drawing. FIG. 1 shows an entire outboard motor 1, which is a first embodiment of a ship propulsion machine of the present disclosure. In FIG. 1, the outboard motor 1 includes a motor unit 2, a propeller 25, a drive shaft 26, a propeller shaft 27, and a gear mechanism 28. The drive shaft 26, the propeller shaft 27, and the gear mechanism 28 serve as an example of a "power transmission mechanism."

The motor unit 2 generates power to propel a ship. The motor unit 2 is arranged in an upper portion of the outboard motor 1 so that it is positioned above a water surface in a state in which the outboard motor 1 is attached to the ship.

The propeller 25 converts the power generated by the motor unit 2 into a propulsive force. The propeller 25 is arranged at a lower portion of the outboard motor 1 so that it is positioned below the water surface in a state in which the outboard motor 1 is attached to the ship.

The drive shaft 26, the propeller shaft 27, and the gear mechanism 28 transmit the power generated by the motor unit 2 to the propeller 25. The drive shaft 26 extends vertically from the upper portion to the lower portion of the outboard motor 1. The propeller shaft 27 is arranged in the lower portion of the outboard motor 1 and extends in the front-rear direction. The propeller 25 is fixed to a rear portion of the propeller shaft 27. The gear mechanism 28 is arranged in a lower front portion of the outboard motor 1. The gear mechanism 28 includes a drive gear 29 and a driven gear 30, the drive gear 29 being fixed to a lower end portion of the drive shaft 26 and the driven gear 30 being fixed to a front end portion of the propeller shaft 27. Both the drive gear 29 and the driven gear 30 are bevel gears, and the meshing of these gears converts rotation of the drive shaft 26 around a vertical axis into rotation of the propeller shaft 27 around a horizontal axis. The drive shaft 26 rotates by receiving the power from the motor unit 2, and the rotation of the drive shaft 26 is transmitted to the propeller shaft 27 via the gear mechanism 28, thereby rotating the propeller 25 together with the propeller shaft 27.

Additionally, a motor holder 31 is provided in the upper portion of the outboard motor 1. The motor holder 31 is formed of, for example, a metal material. The motor unit 2 is attached and fixed to the motor holder 31. Additionally, the upper portion of the outboard motor 1 is provided with a motor cover 32 that covers the motor unit 2 and the motor holder 31. The motor cover 32 includes a bottom cover 33 that covers a lower portion of the motor unit 2 and the motor holder 31, and a top cover 34 that covers an upper portion of the motor unit 2. Additionally, the top cover 34 is attachable and detachable with respect to the bottom cover 33. Additionally, the motor holder 31 is arranged on a bottom side portion within the bottom cover 33. The motor cover 32 serves as an example of a "cover", the bottom cover 33 serves as an example of a "lower cover portion ", and the top cover 34 is a specific example of an "upper cover portion ".

In addition, a vertically middle portion of the outboard motor 1 is provided with a drive shaft case 35 that covers an outer periphery side of the drive shaft 26. Additionally, the lower portion of the outboard motor 1 is provided with a gear case 36 that covers a front portion of the gear mechanism 28 and the propeller shaft 27. Additionally, the outboard motor 1 is provided with a clamp mechanism 37 for detachably fixing the outboard motor 1 to a ship hull. Additionally, the outboard motor 1 is provided with a trim/tilt mechanism 38. The trim/tilt mechanism 38 has a function of adjusting a vertical angle of the outboard motor 1 relative to the ship in order to optimize a posture or the like of the ship during sailing, and a function of pulling up the lower portion of the outboard motor 1 from the water surface when the ship is stationary. By means of the trim/tilt mechanism 38, the outboard motor 1 pivots vertically around a pivot axis X.

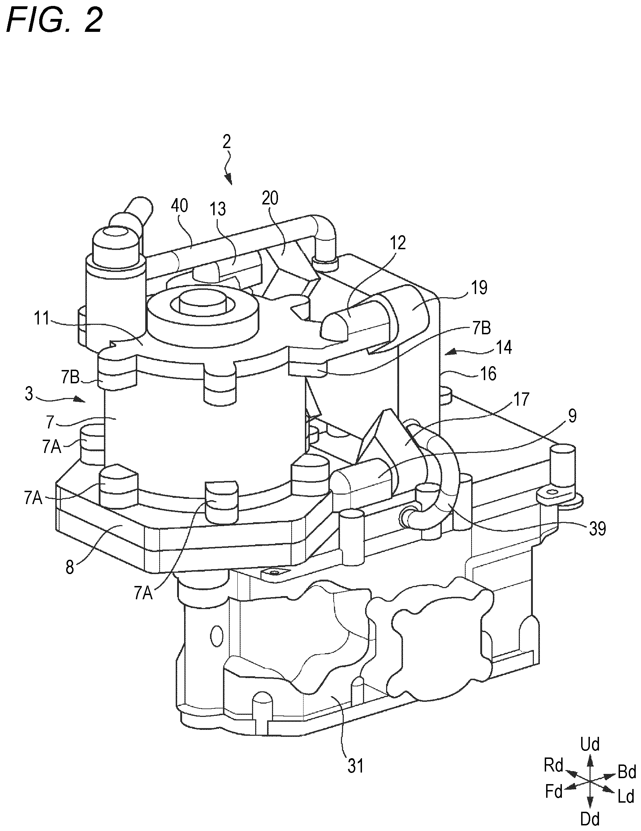

FIGS. 2 to 5 show the motor unit 2 and the motor holder 31 as viewed from the upper left front, the left, above, and the rear, respectively.

As shown in FIG. 2, the motor unit 2 includes a motor 3 and an inverter 14.

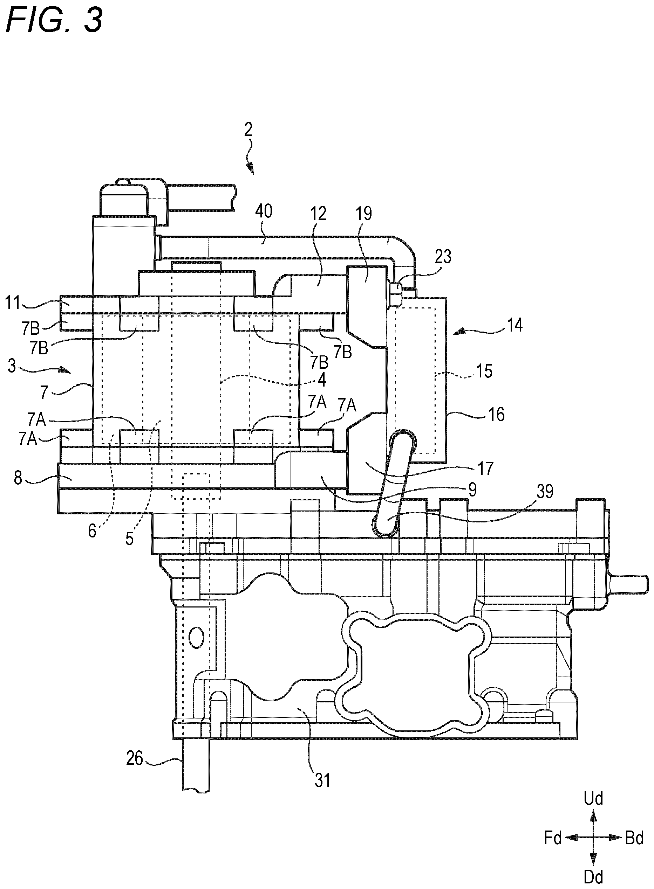

The motor 3 is an AC electric motor, i.e. an AC motor. As shown in FIG. 3, the motor 3 includes a motor shaft 4, a rotor 5 provided on an outer periphery side of the motor shaft 4, a stator 6 provided on an outer periphery side of the rotor 5, and a cylindrical motor housing 7 provided on an outer periphery side of the stator 6. The motor shaft 4 extends vertically and is provided to be rotatable with respect to the motor housing 7. The rotor 5 rotates together with the motor shaft 4. The stator 6 is fixed to the motor housing 7. The motor housing 7 is formed of, for example, a metal material. Additionally, an upper end portion of the drive shaft 26 is connected to a lower end portion of the motor shaft 4.

Additionally, the motor 3 includes a bottom motor bracket 8 and a top motor bracket 11, as shown in FIG. 2. The bottom motor bracket 8 and the top motor bracket 11 are each formed of, for example, a metal material. The bottom motor bracket 8 serves as an example of a "lower motor bracket", and the top motor bracket 11 is a specific example of an "upper motor bracket."

The bottom motor bracket 8 is formed in a polygonal or circular plate shape and is arranged below the motor housing 7 so as to substantially block a lower portion of the motor housing 7. First of all, a through hole is formed in a central portion of the bottom motor bracket 8, and the lower end portion of the motor shaft 4 or the upper end portion of the drive shaft 26 is inserted into the through hole. Additionally, the lower portion of the motor housing 7 is fixed to the bottom motor bracket 8. For example, the lower portion of the motor housing 7 is provided with a plurality of motor fixing parts 7A protruding outward. The motor housing 7 is firmly fixed to the bottom motor bracket 8 by each of the motor fixing parts 7A being fixed to the bottom motor bracket 8. In addition, as shown in FIG. 3, the bottom motor bracket 8 is placed on an upper surface of a front portion of the motor holder 31 and attached and firmly fixed to the motor holder 31.

As shown in FIG. 2, the top motor bracket 11 is formed in a polygonal or circular plate shape and is arranged above the motor housing 7 so as to substantially block an upper portion of the motor housing 7. The upper portion of the motor housing 7 is fixed to the top motor bracket 11. For example, the upper portion of the motor housing 7 is provided with a plurality of motor fixing parts 7B protruding outward. The motor housing 7 is firmly fixed to the top motor bracket 11 by each of the motor fixing parts 7B being fixed to the top motor bracket 11.

The inverter 14 is a device that generates a drive current for controlling drive of the motor 3 by converting current supplied from a battery from direct current to alternating current. As shown in FIG. 3, the inverter 14 includes an inverter body 15 including a power semiconductor and the like, and an inverter housing 16 that covers the inverter body 15. In addition, although not shown, the inverter 14 and the motor 3 are electrically interconnected via a cable. Additionally, although not shown, a cooling mechanism to cool the inverter body 15 using cooling water is provided inside the inverter housing 16. In addition, a piping 39 for supplying cooling water into the inverter housing 16 and a piping 40 for discharging cooling water outside the inverter housing 16 are connected to the inverter housing 16.

A lower portion of the inverter 14 is attached to the bottom motor bracket 8, and an upper portion of the inverter 14 is attached to the top motor bracket 11. A left portion and a right portion of the lower portion of the inverter 14 are attached to the bottom motor bracket 8, respectively. Additionally, a left portion and a right portion of the upper portion of the inverter 14 are attached to the top motor bracket 11, respectively. Additionally, the inverter 14 is attached to a rear portion of each of the bottom motor bracket 8 and the top motor bracket 11.

Specifically, in the present embodiment, as shown in FIGS. 3 to 5, a left rear portion of the bottom motor bracket 8 is provided with a left inverter attachment part 9 protruding rearward from the corresponding potion. Additionally, a right rear portion of the bottom motor bracket 8 is provided with a right inverter attachment part 10 protruding rearward from the corresponding portion. Additionally, a left rear portion of the top motor bracket 11 is provided with a left inverter attachment part 12 protruding rearward from the corresponding portion. Additionally, a right rear portion of the top motor bracket 11 is provided with a right inverter attachment part 13 protruding rearward from the corresponding portion. A lower left portion of a front surface of the inverter housing 16 is provided with a lower left protrusion 17 extending diagonally downward to the left from the corresponding portion. In addition, a lower right portion of the front surface of the inverter housing 16 is provided with a lower right protrusion 18 extending diagonally downward to the right from the corresponding portion. In addition, an upper left portion of the front surface of the inverter housing 16 is provided with an upper left protrusion 19 extending diagonally upward to the left from the corresponding portion. In addition, an upper right portion of the front surface of the inverter housing 16 is provided with an upper right protrusion 20 extending diagonally upward to the right from the corresponding portion.

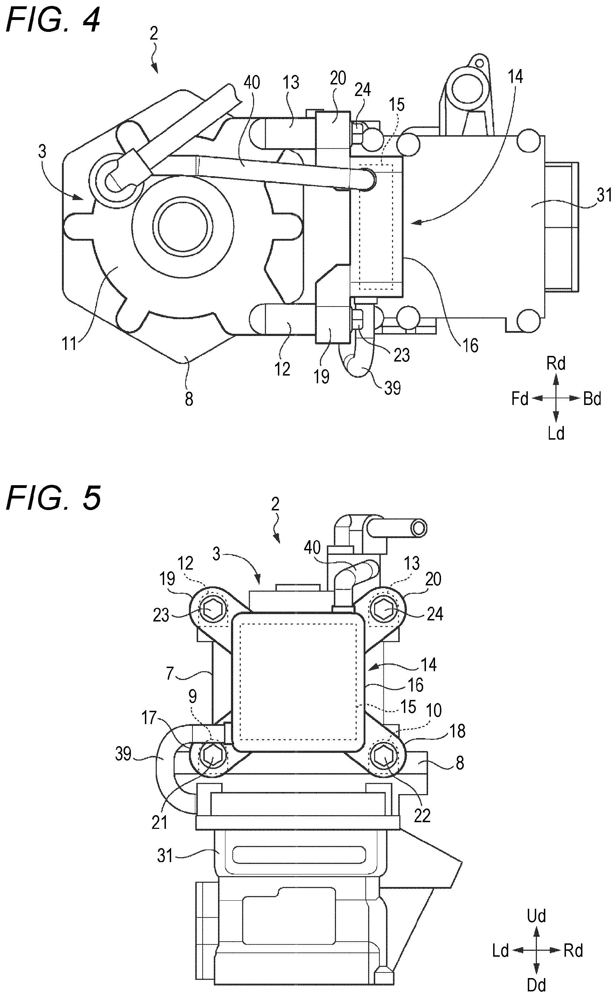

As shown in FIG. 5, the lower left protrusion 17 of the inverter housing 16 is attached and fixed to a rear end portion of the left inverter attachment part 9 of the bottom motor bracket 8 by using, for example, a bolt 21. In addition, the lower right protrusion 18 of the inverter housing 16 is attached and fixed to a rear end portion of the right inverter attachment part 10 of the bottom motor bracket 8 by using, for example, a bolt 22. In addition, the upper left protrusion 19 of the inverter housing 16 is attached and fixed to a rear end portion of the left inverter attachment part 12 of the top motor bracket 11 by using, for example, a bolt 23. In addition, the upper right protrusion 20 of the inverter housing 16 is attached and fixed to a rear end portion of the right inverter attachment part 13 of the top motor bracket 11 by using, for example, a bolt 24. For example, the lower left protrusion 17 is formed with a bolt insertion hole penetrating through the lower left protrusion 17 in the front-rear direction, a rear end surface of the left inverter attachment part 9 is formed with a bolt fastening hole having threads formed on an inner peripheral surface, and the bolt 21 is inserted into the bolt insertion hole of the lower left protrusion 17 from the rear of the lower left protrusion 17 and fastened to the bolt fastening hole of the left inverter attachment part 9. Similarly, the bolts 22, 23, and 24 are inserted into bolt insertion holes formed in the lower right protrusion 18, the upper left protrusion 19, and the upper right protrusion 20, respectively, from the rear of the lower right protrusion 18, the upper left protrusion 19, and the upper right protrusion 20, respectively, and are fastened to bolt fastening holes formed in the right inverter attachment part 10, the left inverter attachment part 12, and the right inverter attachment part 13, respectively. In this way, the inverter 14 is firmly fixed to the rear portion of the bottom motor bracket 8 and the rear portion of the top motor bracket 11. Additionally, each of the bolts 21, 22, 23, and 24 is fastened so that a head thereof faces rearward.

The left inverter attachment part 9 of the bottom motor bracket 8 is a specific example of a "first inverter attachment part", and the right inverter attachment part 10 of the bottom motor bracket 8 is a specific example of a "second inverter attachment part." In addition, the left inverter attachment part 12 of the top motor bracket 11 is a specific example of a "third inverter attachment part," and the right inverter attachment part 13 of the top motor bracket 11 is a specific example of a "fourth inverter attachment part."

In addition, as shown in FIG. 1, the bottom cover 33 covers a lower portion of the motor 3 and a lower portion of the inverter 14. Additionally, the top cover 34 covers an upper portion of the motor 3 and an upper portion of the inverter 14. Additionally, in a side view of the outboard motor 1, an upper end surface 33A of the bottom cover 33 extends between a lower end surface and an upper end surface of the motor housing 7 and between a lower end surface and an upper end surface of the inverter housing 16, respectively. Additionally, the upper end surface 33A of the bottom cover 33 is inclined such that a rear portion of the upper end surface 33A is lower than a front portion.

As described above, in the outboard motor 1 of the first embodiment of the present disclosure, the motor 3 includes the bottom motor bracket 8 to which the lower portion of the motor housing 7 is fixed, and the top motor bracket 11 to which the upper portion of the motor housing 7 is fixed, the lower portion of the inverter 14 is attached to the bottom motor bracket 8, and the upper portion of the inverter 14 is attached to the top motor bracket 11. In this way, the inverter 14 is attached to the motor 3. The motor 3 with the inverter 14 attached is attached to the motor holder 31 arranged on the bottom side portion within the bottom cover 33. As a result, the motor 3 is directly supported by the motor holder 31, and the inverter 14 is supported by the motor holder 31 via the motor 3. According to this configuration, the motor 3 and the inverter 14 can be brought close to each other, allowing the motor 3 and the inverter 14 to be concentratedly arranged within a small area. Accordingly, it is possible to suppress an increase in size of the motor cover 32 and consequently, the outboard motor 1.

In addition, since the configuration is such that the motor 3 with the inverter 14 attached is attached to the motor holder 31, an area that needs to be secured in the motor holder 31 when supporting the motor 3 and the inverter 14 by the motor holder 31 may only need to be an area required for attaching the motor 3. Therefore, the motor holder 31 does not need to be increased in size. Therefore, it is possible to suppress the outboard machine 1 from becoming larger due to an increase in size of the motor holder 31. In addition, the motor holder 31 can be made smaller and lighter, which contributes to a reduction in weight of the outboard motor 1.

In addition, by attaching the inverter 14 to the two motor brackets 8 and 11 spaced vertically apart from each other, the inverter 14 can be firmly supported by the motor 3.

In addition, the motor housing 7, the bottom motor bracket 8, and the top motor bracket 11 have high rigidity to prevent axial misalignment of the motor shaft 4 and the rotor 5. Additionally, the motor 3 is firmly attached to the motor holder 31 to prevent positional misalignment of the motor shaft 4. Additionally, the motor holder 31 has high rigidity to firmly support the high-speed rotating motor 3. Therefore, by attaching to the motor holder 31 the motor 3 with the inverter 14 attached, the inverter 14 can be firmly supported by the motor holder 31 via the motor 3.

In this way, according to the outboard motor 1 of the present embodiment, it is possible to suppress an increase in size of the outboard motor 1 while ensuring sufficient support strength for the motor 3 and the inverter 14.

In addition, in the outboard motor 1 of the present embodiment, the left portion and the right portion of the lower portion of the inverter 14 are attached to the bottom motor bracket 8, respectively. With this configuration, the inverter 14 can be firmly fixed to the motor 3, thereby preventing the heavy inverter 14 including a water cooling-type cooling mechanism from being positionally misaligned or rattling. In addition, in the outboard motor 1 of the present embodiment, the left portion and the right portion of the upper portion of the inverter 14 are attached to the top motor bracket 11, respectively. Even with this configuration, the inverter 14 can be firmly fixed to the motor 3, thereby preventing positional misalignment and rattling of the inverter 14.

In addition, in the outboard motor 1 of the present embodiment, the left inverter attachment part 9 and the right inverter attachment part 10 are respectively provided on the left rear and right rear portions of the bottom motor bracket 8, the left inverter attachment part 12 and the right inverter attachment part 13 are respectively provided on the left rear and right rear portions of the top motor bracket 11, and the lower left, lower right, upper left, and upper right portions of the inverter 14 are respectively attached to the left inverter attachment part 9, the right inverter attachment part 10, the left inverter attachment part 12, and the right inverter attachment part 13. With this configuration, four corner portions of the inverter 14 can be fixed to the motor 3. Accordingly, the inverter 14 can be further firmly fixed to the motor 3, thereby enhancing the effect of preventing positional misalignment and rattling of the inverter 14.

In addition, by configuring the motor 3 with the inverter 14 attached to be attached to the motor holder 31, the assemble workability of the outboard motor 1 can be improved. That is, the inverter 14 is attached to the motor 3, and the motor 3 and the inverter 14 are electrically interconnected via the cable, the motor unit 2 in which the cable is arranged is manufactured in advance, and when assembling the outboard motor 1, the motor unit 2 manufactured in advance is attached to the motor holder 31. With this, the assembling of outboard motor 1 can be carried out efficiently and quickly. In addition, since the motor unit 2, in which the highly related motor 3 and inverter 14 are combined, can be handled as a single component, it becomes to easily perform repairs, improvements, and the like on the outboard motor 1.

In addition, in the outboard motor 1 of the present embodiment, the inverter 14 is attached to the rear portion of each of the bottom motor bracket 8 and the top motor bracket 11. This allows easy access to the inverter 14 in a state in which the lower portion of the outboard motor 1 is pulled up using the trim/tilt mechanism 38, making it easy to perform maintenance on the inverter 14. In addition, even when the outboard motor 1 is removed from the ship and attached to an outboard motor stand, the inverter 14 can be easily accessed from the rear of the outboard motor 1, making it easy to perform maintenance on the inverter 14. In addition, as shown in FIG. 5, since each of the bolts 21, 22, 23, and 24 that secure the inverter 14 to the bottom motor bracket 8 and the top motor bracket 11 is fastened such that the head thereof faces rearward, operations such as removing or fastening the bolts 21, 22, 23, and 24 can be easily performed from the rear of the outboard motor 1. Therefore, when performing maintenance on the inverter 14, the inverter 14 can be easily attached and detached. In addition, since the inverter 14 is arranged at the rear of the motor 3 rather than above the motor 3, other components can be arranged above the motor 3.

In addition, in a side view of the outboard motor 1 of the present embodiment, the upper end surface 33A of the bottom cover 33 extends between the lower end surface and the upper end surface of the inverter housing 16. With this, when the top cover 34 is separated, the upper portion of the inverter 14 is exposed from the bottom cover 33, making it easy to check a state of the inverter 14 and perform operations such as replacing the inverter 14. In addition, even in a state in which the top cover 34 is separated, the lower portion of the inverter 14 remains covered by the bottom cover 33, preventing the inverter 14 from being exposed to water when seawater or the like splashes up.

In addition, in the present embodiment, the upper end surface 33A of the bottom cover 33 is inclined such that the rear portion of the upper end surface 33A is lower than the front portion. With this, even when a trim angle of the outboard motor 1 is large, the position of the upper end surface of the rear portion of the bottom cover 33 is lowered. Therefore, when performing an operation such as maintenance on the motor 3 or inverter 14 by separating the top cover 34 while the trim angle of outboard motor 1 is large, the operation can be performed easily.

### (Second Embodiment)

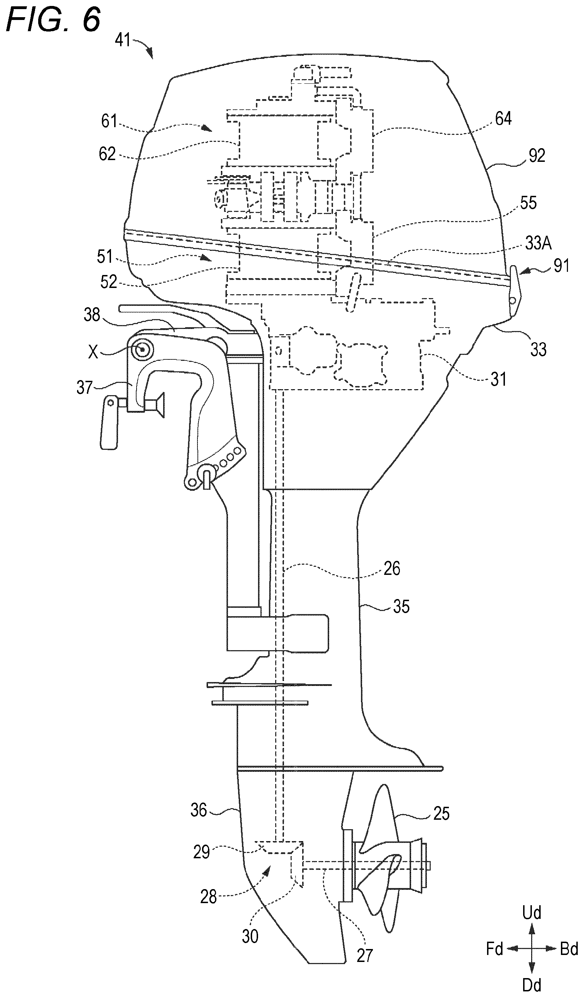

An outboard motor 41, which is a second embodiment of a ship propulsion machine of the present disclosure, will be described with reference to FIGS. 6 to 10. In the description of the present embodiment, when referring to upper (Ud), lower (Dd), front (Fd), rear (Bd), left (Ld), and right (Rd) directions, they follow arrows drawn at the lower right in each drawing. A feature of the second embodiment compared to the first embodiment is that the outboard motor 41 includes two motor units 51 and 61. In the second embodiment, the same components as those in the first embodiment are denoted by the same reference signs, and the descriptions thereof are simplified or omitted.

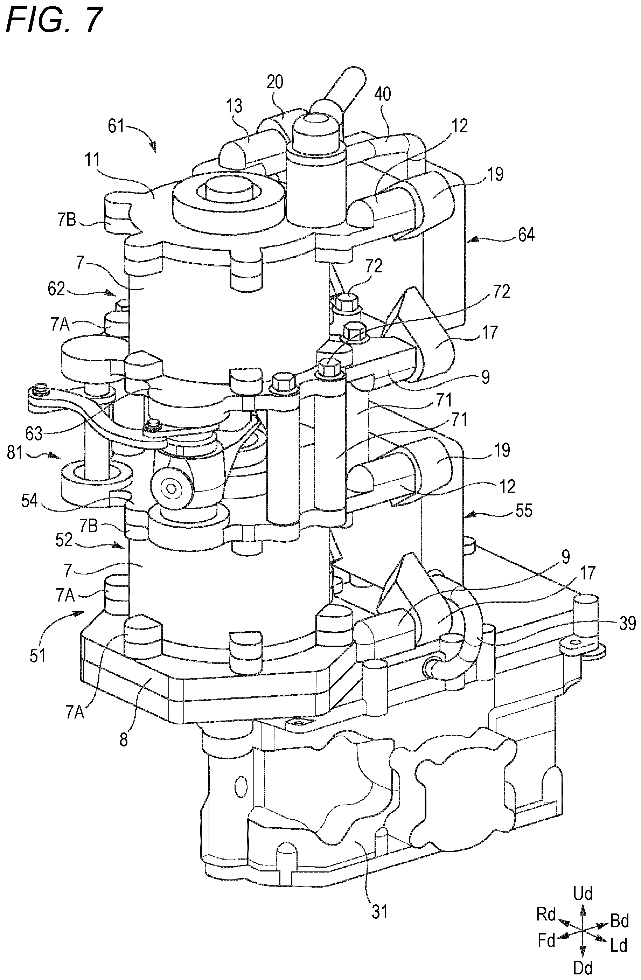

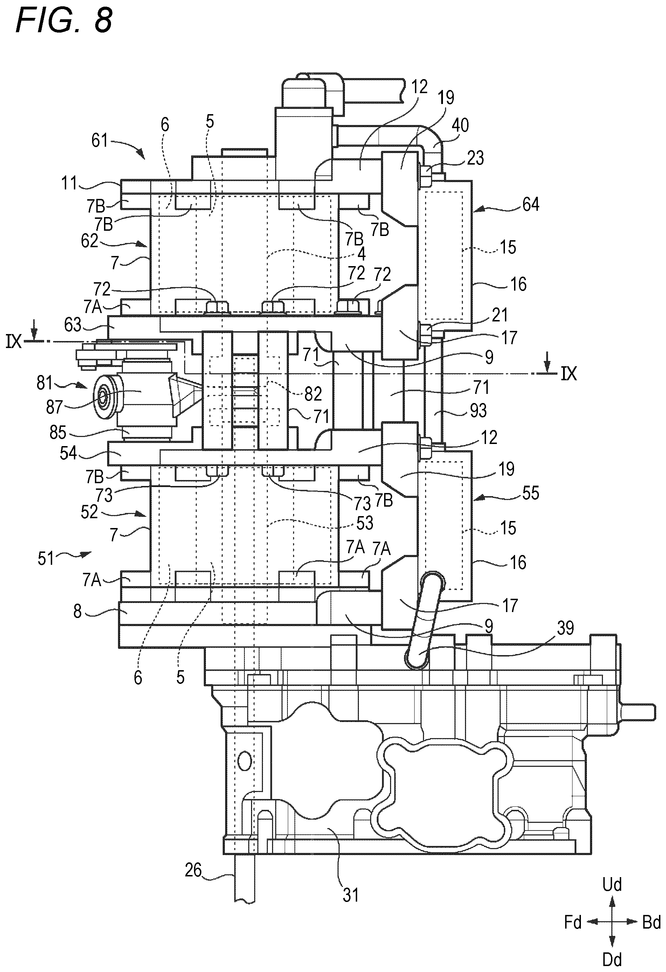

FIG. 6 shows the entire outboard motor 41. FIGS. 7 and 8 show the two motor units 51, 61 and the motor holder 31 of the outboard motor 41, as viewed from the upper left front and the left, respectively.

The outboard motor 41 includes a first motor unit 51 and a second motor unit 61, as shown in FIG. 7. The first motor unit 51 is arranged on the motor holder 31, and the second motor unit 61 is arranged above the first motor unit 51.

As shown in FIG. 6, the two motor units 51 and 61, stacked vertically, are provided in an upper portion of the outboard motor 41. Additionally, a motor cover 91 is provided at the upper portion of the outboard motor 41. The motor cover 91 includes a bottom cover 33 and a top cover 92. The bottom cover 33 is substantially the same as that in the first embodiment. The top cover 92 has a vertical dimension larger than that of the top cover 34 in the first embodiment and a larger volume than that of the top cover 34 in the first embodiment. The bottom cover 33 covers a lower portion of the first motor unit 51 and the motor holder 31. The top cover 92 covers an upper portion of the first motor unit 51 and the entire second motor unit 61.

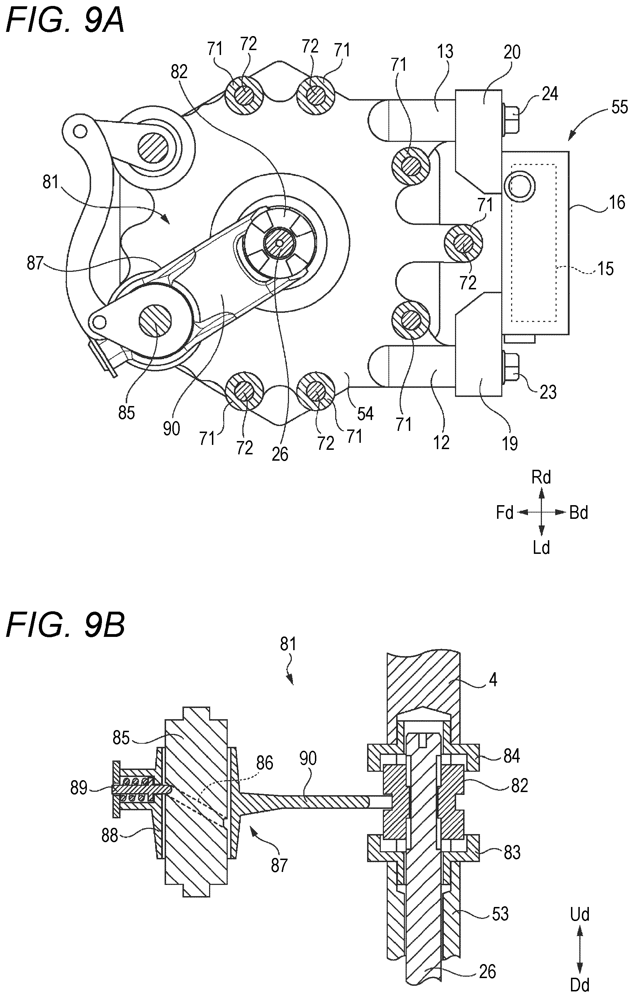

In FIG. 8, the first motor unit 51 includes a motor 52 and an inverter 55. A clutch camshaft 85, described below, is attached to a front portion of a top motor bracket 54 of the motor 52, and a plurality of connecting members 71, described below, are attached to a left portion, a right portion, and a rear portion of the top motor bracket 54 of the motor 52. In addition, as described below, a motor shaft 53 of the motor 52 is formed in a cylindrical shape, and an upper portion of a drive shaft 26 is inserted into an inner periphery side thereof. In addition, as described below, a connected member 83 is attached to an upper end portion of the motor shaft 53 of the motor 52 (see FIG. 9B). Except for the above, the motor 52 is substantially the same as the motor 3 in the first embodiment. Additionally, a piping 93 for delivering cooling water from the inverter 55 of the first motor unit 51 to an inverter 64 of the second motor unit 61 is connected to an upper portion of the inverter 55. Except for this, the inverter 55 is substantially the same as the inverter 14 in the first embodiment. In addition, in the first motor unit 51, the inverter 55 is attached and fixed to rear portions of the bottom motor bracket 8 and top motor bracket 54 of the motor 52. This is similar to the motor unit 2 in the first embodiment.

In addition, the second motor unit 61 includes a motor 62 and an inverter 64. A clutch camshaft 85, described below, is attached to a front portion of a bottom motor bracket 63 of the motor 62, and a plurality of connecting members 71, described below, are attached to a left portion, a right portion, and a rear portion of the bottom motor bracket 63 of the motor 62. In addition, as described below, a connected member 84 is attached to a lower end portion of the motor shaft 4 of the motor 62 (see FIG. 9B). Except for the above, the motor 62 is substantially the same as the motor 3 in the first embodiment. Additionally, a piping 93 for delivering cooling water from the inverter 55 of the first motor unit 51 to the inverter 64 of the second motor unit 61 is connected to a lower portion of the inverter 55. Except for this, the inverter 64 is substantially the same as the inverter 14 in the first embodiment. In addition, in the second motor unit 61, the inverter 64 is attached and fixed to rear portions of the bottom motor bracket 63 and top motor bracket 11 of the motor 62. This is similar to the motor unit 2 in the first embodiment.

The motor 52 of the first motor unit 51 is fixed to the motor holder 31 by the bottom motor bracket 8 being attached to the motor holder 31, similarly to the motor 3 in the first embodiment. The motor 62 of the second motor unit 61 is arranged above the motor 52 of the first motor unit 51, and is attached and fixed to the motor 52 of the first motor unit 51 using a plurality of connecting members 71. In addition, a space is formed between the motor 52 and the motor 62. Additionally, the motors 52 and 62 are arranged so that the respective motor shafts 53 and 4 are coaxial. Additionally, the inverter 64 is arranged directly above the inverter 55, and when viewed from above the outboard motor 41, the inverter 64 substantially completely overlaps the inverter 55.

Each connecting member 71 is a column-shaped member formed of, for example, a metal material. A lower portion of each connecting member 71 is fixed to the top motor bracket 54 of the motor 52. Additionally, the bottom motor bracket 63 of the motor 62 is fixed to an upper portion of each connecting member 71. In the present embodiment, a central portion of each connecting member 71 is formed with a through hole penetrating axially. In addition, through holes penetrating vertically are formed in portions of the top motor bracket 54 of the motor 52 and the bottom motor bracket 63 of the motor 62 where each connecting member 71 is arranged. Each connecting member 71 is fixed between the top motor bracket 54 and the bottom motor bracket 63 by inserting a bolt 72 into each of the through holes of the connecting member 71, the top motor bracket 54 of the motor 52, and the bottom motor bracket 63 of the motor 62, and fastening a nut 73 onto an end portion of the bolt 72. With this, the motor 52 and the motor 62 are connected.

The plurality of connecting members 71 are arranged on an outer periphery-side portion of each of the top motor bracket 54 and the bottom motor bracket 63. FIG. 9A is a cross-sectional view taken along cutting line IX-IX in FIG. 8, showing a section between the motor unit 51 and the motor unit 61, as viewed from above. As shown in FIG. 9A, in the present embodiment, two of the seven connecting members 71 are arranged on the left portion of the top motor bracket 54 and the bottom motor bracket 63, the other two connecting members 71 are arranged on the right portion of the top motor bracket 54 and the bottom motor bracket 63, and the remaining three connecting members 71 are arranged on the rear portion of the top motor bracket 54 and the bottom motor bracket 63.

In addition, the outboard motor 41 includes a power switching mechanism 81. The power switching mechanism 81 is a mechanism that switches a connection mode between the two motors 52 and 62 and the drive shaft 26 among a first mode in which the motors 52 and 62 are connected to the drive shaft 26, a second mode in which only the motor 52 is connected to the drive shaft 26, and a third mode in which only the motor 62 is connected to the drive shaft 26. When the connection mode between the motors 52 and 62 and the drive shaft 26 is switched to the first mode, the powers of both the motors 52 and 62 are transmitted to the drive shaft 26, and the propeller 25 is rotated by a force obtained by combining the powers of both the motors 52 and 62. When the connection mode between the motors 52 and 62 and the drive shaft 26 is switched to the second mode, only the power of the motor 52 is transmitted to the drive shaft 26, and the propeller 25 is rotated only by the power of the motor 52 of the motors 52 and 62. When the connection mode between the motors 52 and 62 and the drive shaft 26 is switched to the third mode, only the power of the motor 62 is transmitted to the drive shaft 26, and the propeller 25 is rotated only by the power of the motor 62 of the motors 52 and 62. The power switching mechanism 81 is provided between the motor 52 and the motor 62, as shown in FIG. 8.

FIG. 9B schematically shows a configuration of the power switching mechanism 81. An upper end portion of the motor shaft 53 of the motor 52 and a lower end portion of the motor shaft 4 of the motor 62 face each other within the space formed between the motors 52 and 62, as shown in FIG. 9B. In addition, the upper portion of the drive shaft 26 passes through the inner periphery side of the cylindrical motor shaft 53 of the motor 52 and is located within the space formed between the motor 52 and the motor 62. The upper portion of the drive shaft 26 is inserted into the inner periphery side of the motor shaft 53, but the outer peripheral surface of the drive shaft 26 and the inner peripheral surface of the motor shaft 53 are not in contact with each other. For this reason, the drive shaft 26 and the motor shaft 53 can rotate independently. In addition, a connecting member 82 formed in a cylindrical shape is provided at the upper end portion of the drive shaft 26. The connecting member 82 is attached to an outer periphery side of the upper end portion of the drive shaft 26 so as to be non-rotatable with respect to the drive shaft 26 and movable vertically with respect to the drive shaft 26. In addition, a connected member 83 is attached and fixed to the upper end portion of the motor shaft 53 of the motor 52. In addition, a connected member 84 is attached and fixed to the lower end portion of the motor shaft 4 of the motor 62. The connecting member 82 is located between the connected member 83 and the connected member 84. The connecting member 82 is, for example, a dog clutch, and teeth are formed on each of lower and upper end portions of the connecting member 82. In addition, teeth that can fit with the teeth on the lower end portion of the connecting member 82 are formed on the connected member 83, and teeth that can fit with the teeth on the upper end portion of the connecting member 82 are formed on the connected member 84.

In addition, a clutch camshaft 85 is provided near the connecting member 82 within the space between the motor 52 and the motor 62. The clutch camshaft 85 extends vertically and has a lower end portion rotatably supported by the top motor bracket 54 of the motor 52 and an upper end portion rotatably supported by the bottom motor bracket 63 of the motor 62. Additionally, a cam groove 86 is formed on an outer peripheral surface of the clutch camshaft 85.

In addition, a fork unit 87 is attached to the clutch camshaft 85. The fork unit 87 includes a cylindrical base part 88, a driven pin 89 provided on the base part 88, and a fork part 90 extending from the base part 88 toward the connecting member 82. The base part 88 is arranged on an outer periphery side of the clutch camshaft 85, and a tip end portion of the driven pin 89 is inserted into the cam groove 86 of the clutch camshaft 85. In addition, a tip end portion of the fork part 90 is split into two prongs, gripping the connecting member 82, as shown in FIG. 9A. The gripping on the connecting member 82 by the fork part 90 is not strong, and therefore, the connecting member 82 can rotate while being gripped by the fork part 90.

A cylindrical cam is constituted by the clutch camshaft 85 and the fork unit 87. For example, when the clutch camshaft 85 rotates in one direction, the fork unit 87 moves upward, and along with this, the connecting member 82 moves upward. On the other hand, when the clutch camshaft 85 rotates in the other direction, the fork unit 87 moves downward, and along with this, the connecting member 82 moves downward.

When the connecting member 82 is located at a middle position between the connected member 83 and the connected member 84, the teeth on the lower end portion of the connecting member 82 and the teeth on the connected member 83 fit with each other, and at the same time, the teeth on the upper end portion of the connecting member 82 and the teeth on the connected member 84 fit with each other. With this, both the motor shaft 53 of the motor 52 and the motor shaft 4 of the motor 62 are connected to the drive shaft 26. That is, the connection mode between the two motors 52 and 62 and the drive shaft 26 assumes the first mode. In addition, when the connecting member 82 moves to a lower position between the connected member 83 and the connected member 84, the teeth on the lower end portion of the connecting member 82 and the teeth on the connected member 83 fit with each other, and the fitting between the teeth on the upper end portion of the connecting member 82 and the teeth on the connected member 84 is released. With this, only the motor shaft 53 of the motor 52 is connected to the drive shaft 26. That is, the connection mode between the two motors 52 and 62 and the drive shaft 26 assumes the second mode. In addition, when the connecting member 82 moves to an upper position between the connected member 83 and the connected member 84, the teeth on the upper end portion of the connecting member 82 and the teeth on the connected member 84 fit with each other, and the fitting between the teeth on the lower end portion of the connecting member 82 and the teeth on the connected member 83 is released. With this, only the motor shaft 4 of the motor 62 is connected to the drive shaft 26. That is, the connection mode between the two motors 52 and 62 and the drive shaft 26 assumes the third mode. Although not shown, the outboard motor 41 is provided with an actuator (e.g., a DC motor) that rotates the clutch camshaft 85 based on an operation signal input from the outside, and is adapted to switch the connection mode between the two motors 52 and 62 and the drive shaft 26 based on the operation signal.

The outboard motor 41 can switch the connection mode between the two motors 52, 62 and the drive shaft 26, allowing the performance of the outboard motor 41 to be improved. Specifically, the output or torque of the outboard motor 41 can be significantly changed in response to sailing conditions of the ship, and the power consumption of the outboard motor 41 can be adjusted. For example, the output or torque of the outboard motor 41 can be significantly increased by switching the connection mode between the two motors 52 and 62 and the drive shaft 26 to the first mode. In addition, the power consumption of the outboard motor 41 can be reduced by switching the connection mode between the two motors 52, 62 and the drive shaft 26 to the second or third mode. In addition, for example, when one of the motors 52 and 62 fails during sailing, the failed motor can be disconnected from the drive shaft 26 and the non-failed motor can be connected to the drive shaft 26, allowing the propeller 25 to rotate only with the power of the non-failed motor, thereby moving the ship.

According to the outboard motor 41 of the second embodiment of the present disclosure having such a configuration, it is possible to realize a small outboard motor with high performance while ensuring sufficient support strength for the two motors 52 and 62 and the two inverters 55 and 64.

That is, in the first motor unit 51, the inverter 55 is attached to the bottom motor bracket 8 and top motor bracket 54 of the motor 52. In addition, in the second motor unit 61, the inverter 64 is attached to the bottom motor bracket 63 and top motor bracket 11 of the motor 62. Additionally, the motor 62 is arranged above the motor 52 and connected to the motor 52 by using the plurality of connecting members 71. The motor 62 is connected to the motor 52 in this way, so that the inverter 64 attached to the motor 62 is arranged above the inverter 55 attached to the motor 52. According to this configuration, the two inverters 55 and 64 can be aligned vertically, and the two inverters 55 and 64 aligned vertically can be brought close to the two motors 52 and 62 aligned vertically. With this, the two motors 52 and 62 and the two inverters 55 and 64 can be concentratedly arranged within a small area. In addition, since the motor 52 can be arranged in the lower front portion of the area above the motor holder 31, the motor 62 can be arranged in the upper front portion of the area, the inverter 55 can be arranged in the lower rear portion of the area, and the inverter 64 can be arranged in the upper rear portion of the area, the area above the motor holder 31 can be used extremely efficiently. With this, the integration of the two motors 52 and 62 and the two inverters 55 and 64 can be increased. Accordingly, according to the outboard motor 41 of the present embodiment, a small outboard motor can be realized, even with the inclusion of the two motors 52 and 62 and the two inverters 55 and 64.

In addition, since the configuration is such that the motor 62 with the inverter 64 attached is arranged above the motor 52 with the inverter 55 attached, and the motor 62 with the inverter 64 attached is connected to the motor 52 with the inverter 55 attached by using the plurality of connecting members 71, an area that needs to be secured in the motor holder 31 when supporting the two motors 52 and 62 and the two inverters 55 and 64 by the motor holder 31 may only need to be an area required for attaching the motor 52. Therefore, the motor holder 31 does not need to be increased in size. Therefore, it is possible to suppress the outboard machine 1 from becoming larger due to an increase in size of the motor holder 31.

In addition, as with the motor unit 2 in the first embodiment, the inverter 55 can be firmly supported by the upper and lower motor brackets 8 and 54 of the motor 52, and the inverter 64 can be firmly supported by the upper and lower motor brackets 63 and 11 of the motor 62. Additionally, the motor 62 can be firmly supported by the motor 52 using the plurality of connecting members 71. In addition, as with the motor 3 in the first embodiment, the motor 52 and the motor 62 each have high rigidity, and furthermore, the motor 52 is firmly attached to the motor holder 31 having high rigidity. Accordingly, according to the outboard motor 41 of the present embodiment, the motor 52 can be directly and firmly supported by the motor holder 31, the inverter 55 can be firmly supported by the motor holder 31 via the motor 52, the motor 62 can be firmly supported by the motor holder 31 via the motor 52 and the connecting members 71, and the inverter 64 can be firmly supported by the motor holder 31 via the motor 52, the connecting members 71, and the motor 62.

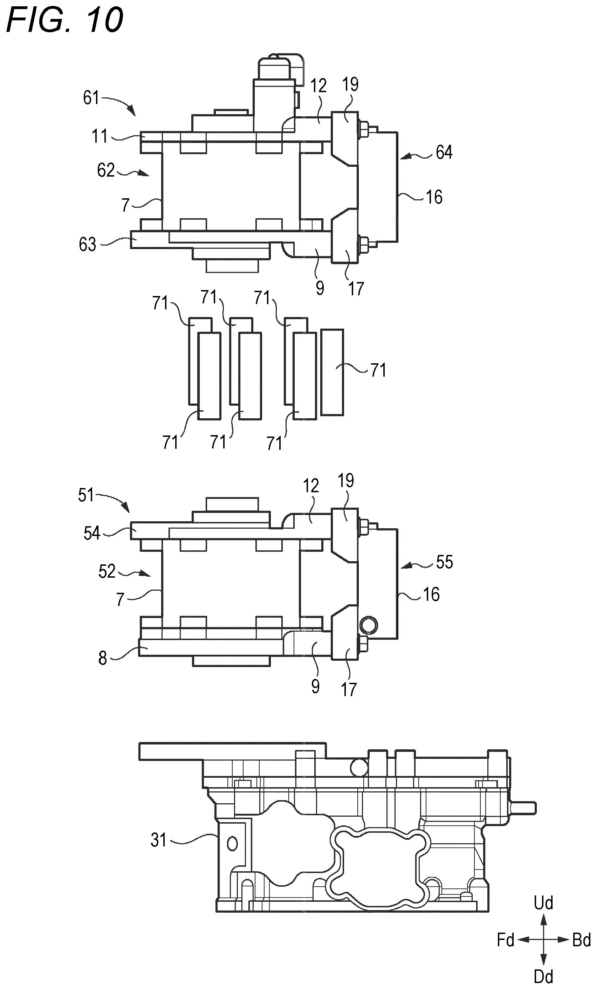

In addition, according to the outboard motor 41 of the present embodiment, the assemble workability of the outboard motor 41 can be enhanced. That is, as shown in FIG. 10, the first motor unit 51 and the second motor unit 61 are each manufactured in advance, and when assembling the outboard motor 41, the first motor unit 51 and the second motor unit 61 manufactured in advance are connected to each other using the connecting members 71, and the first motor unit 51 and the second motor unit 61, connected to each other, are attached to the motor holder 31. With this, the assembling of the outboard motor 41 can be carried out efficiently and quickly.

In each of the embodiments, the example where the lower left and lower right portions of the inverter 14 (55, 64) are attached to the bottom motor bracket of the motor and the upper left and upper right portions of the inverter 14 (55, 64) are attached to the top motor bracket of the motor has been described, but the portions of the inverter 14 (55, 64), which are attached to the motor, are not limited thereto. For example, the lower left and lower right portions of the inverter 14 (55, 64) may be attached to the bottom motor bracket of the motor, and the upper central portion of the inverter 14 (55, 64) may be attached to the top motor bracket of the motor. In addition, the lower central portion of the inverter 14 (55, 64) may be attached to the bottom motor bracket of the motor, and the upper left and upper right portions of the inverter 14 (55, 64) may be attached to the top motor bracket of the motor. Additionally, the locations of the inverter, which are attached to the upper and lower motor brackets, may be five or more locations.

Further, in the second embodiment, the outboard motor 41 having the two motor units 51 and 61 aligned vertically has been exemplified, but three or more motor units may be aligned vertically.

Furthermore, in the present disclosure, when the outboard motor is provided with a plurality of motor units, the power switching mechanism is not limited to that described in the second embodiment. For example, the upper end portion of the drive shaft 26 may be connected to the lower end portion of the motor shaft of the motor 52 of the first motor unit 51 all the time, and a power switching mechanism that switches connection and disconnection between the two motor shafts may be provided between the upper end portion of the motor shaft of the motor 52 of the first motor unit 51 and the lower end portion of the motor shaft of the motor 62 of the second motor unit 61. In addition, the present disclosure also includes an outboard motor in which no power switching mechanism is provided and both the motor shaft of the motor of the first motor unit and the motor shaft of the motor of the second motor unit are connected to the drive shaft all the time.

In addition, the present disclosure can be applied to a ship propulsion machine other than the outboard motor.

In addition, the present disclosure can be changed as appropriate without departing from the scope of the disclosure which can be read from the claims and the entire specification.

## Claims

1. A ship propulsion machine (1; 41) comprising:
a motor (3; 52, 62);
an inverter (14; 55, 64) configured to generate a driving current for controlling drive of the motor (3; 52, 62);
a propeller (25); and
a power transmission mechanism (26, 27, 28) configured to transmit power of the motor (3; 52, 62) to the propeller (25),
wherein the motor (3; 52, 62) comprises:
a motor shaft (4; 53);
a rotor (5);
a stator (6);
a motor housing (7) in which the motor shaft (4; 53), the rotor (5), and the stator (6) provided are housed;
a lower motor bracket (8; 63) to which a lower portion of the motor housing (7) is fixed; and
an upper motor bracket (11; 54) to which an upper portion of the motor housing (7) is fixed, and
wherein a lower portion of the inverter (14; 55, 64) is attached to the lower motor bracket (8; 63), and an upper portion of the inverter (14; 55, 64) is attached to the upper motor bracket (11; 54).

2. The ship propulsion machine (1; 41) according to claim 1, wherein each of a left portion of the inverter (14; 55, 64) and a right portion of the inverter (14; 55, 64) is attached to the lower motor bracket (8; 63).

3. The ship propulsion machine (1; 41) according to claim 1, wherein each of a left portion of the inverter (14; 55, 64) and a right portion of the inverter (14; 55, 64) is attached to the upper motor bracket (11; 54).

4. The ship propulsion machine (1; 41) according to claim 1, wherein the inverter (14; 55, 64) is attached to a rear portion of each of the lower motor bracket (8; 63) and the upper motor bracket (11; 54).

5. The ship propulsion machine (1; 41) according to claim 1,
wherein the lower motor bracket (8; 63) comprises:
a first inverter attachment part (9) protruding rearward from a left rear portion of the lower motor bracket (8; 63); and
a second inverter attachment part (10) protruding rearward from a right rear portion of the lower motor bracket (8; 63),
wherein the upper motor bracket (11; 54) comprises:
a third inverter attachment part (12) protruding rearward from a left rear portion of the upper motor bracket (11; 54); and
a fourth inverter attachment part (13) protruding rearward from a right rear portion of the upper motor bracket (11; 54), and
wherein a lower left portion of the inverter (14; 55, 64) is attached to the first inverter attachment part (9), a lower right portion of the inverter (14; 55, 64) is attached to the second inverter attachment part (10), an upper left portion of the inverter (14; 55, 64) is attached to the third inverter attachment part (12), and an upper right portion of the inverter (14; 55, 64) is attached to the fourth inverter attachment part (13).

6. The ship propulsion machine (1; 41) according to claim 1,
wherein the motor (3; 52, 62), the inverter (14; 55, 64), and a cover (32; 91) configured to cover the motor (3; 52, 62) and the inverter (14; 55, 64) are provided in an upper portion of the ship propulsion machine (1; 41),
wherein the cover (32; 91) comprises a lower cover part (33) and an upper cover part (34; 92), and
wherein the lower cover part (33) is configured to cover a lower portion of the motor (3; 52) and a lower portion of the inverter (14; 55), the upper cover part (34; 92) is configured to cover an upper portion of the motor (3; 52) and an upper portion of the inverter (14; 55), the upper cover part (34; 92) is attachable and detachable with respect to the lower cover part (33), and when viewed from a side of the ship propulsion machine (1; 41), an upper end surface of the lower cover part (33) extends between a lower end surface of the inverter (14; 55) and an upper end surface of the inverter (14; 55).

7. The ship propulsion machine (1; 41) according to claim 6, wherein the upper end surface of the lower cover part (33) is inclined such that a rear portion thereof is lower than a front portion of the upper end surface thereof.

8. The ship propulsion machine (41) according to claim 1, comprising a first motor unit (51) and a second motor unit (61), each of the first motor unit (51) and the second motor unit (61) comprising the motor (52, 62) and the inverter (55, 64) supported by the lower motor bracket (8, 63) of the motor (52, 62) and the upper motor bracket (11, 54) of the motor (52, 62),
wherein the second motor unit (61) is arranged above the first motor unit (51), and
wherein the second motor unit (61) is supported by the first motor unit (51) by connecting the upper motor bracket (54) of the motor (52) in the first motor unit (51) and the lower motor bracket (63) of the motor (62) in the second motor unit (61).

## Patentansprüche

1. Schiffsantriebsmaschine (1; 41), umfassend:
einen Motor (3; 52, 62);
einen Wechselrichter (14; 55, 64), der konfiguriert ist, um einen Antriebsstrom zum Steuern eines Antriebs des Motors (3; 52, 62) zu erzeugen;
einen Propeller (25); und
einen Leistungsübertragungsmechanismus (26, 27, 28), der konfiguriert ist, um Leistung des Motors (3; 52, 62) an den Propeller (25) zu übertragen,
wobei der Motor (3; 52, 62) umfasst:
eine Motorwelle (4; 53);
einen Rotor (5);
einen Stator (6);
ein Motorgehäuse (7), in dem die Motorwelle (4; 53), der Rotor (5) und der Stator (6), die bereitgestellt sind, untergebracht sind;
eine untere Motorhalterung (8; 63), an der ein unterer Abschnitt des Motorgehäuses (7) befestigt ist; und
eine obere Motorhalterung (11; 54), an der ein oberer Abschnitt des Motorgehäuses (7) befestigt ist, und
wobei ein unterer Abschnitt des Wechselrichters (14; 55, 64) an der unteren Motorhalterung (8; 63) angebracht ist und ein oberer Abschnitt des Wechselrichters (14; 55, 64) an der oberen Motorhalterung (11; 54) angebracht ist.

2. Schiffsantriebsmaschine (1; 41) nach Anspruch 1, wobei sowohl ein linker Abschnitt des Wechselrichters (14; 55, 64) als auch ein rechter Abschnitt des Wechselrichters (14; 55, 64) an der unteren Motorhalterung (8; 63) angebracht ist.

3. Schiffsantriebsmaschine (1; 41) nach Anspruch 1, wobei sowohl ein linker Abschnitt des Wechselrichters (14; 55, 64) als auch ein rechter Abschnitt des Wechselrichters (14; 55, 64) an der oberen Motorhalterung (11; 54) angebracht ist.

4. Schiffsantriebsmaschine (1; 41) nach Anspruch 1, wobei der Wechselrichter (14; 55, 64) an einem hinteren Abschnitt sowohl der unteren Motorhalterung (8; 63) als auch der oberen Motorhalterung (11; 54) angebracht ist.

5. Schiffsantriebsmaschine (1; 41) nach Anspruch 1,
wobei die untere Motorhalterung (8; 63) umfasst:
ein erstes Wechselrichter-Anbringungsteil (9), das von einem linken hinteren Abschnitt der unteren Motorhalterung (8; 63) nach hinten ragt; und
ein zweites Wechselrichter-Anbringungsteil (10), das von einem rechten hinteren Abschnitt der unteren Motorhalterung (8; 63) nach hinten ragt,
wobei die obere Motorhalterung (11; 54) umfasst:
ein drittes Wechselrichter-Anbringungsteil (12), das von einem linken hinteren Abschnitt der oberen Motorhalterung (11; 54) nach hinten ragt; und
ein viertes Wechselrichter-Anbringungsteil (13), das von einem rechten hinteren Abschnitt der oberen Motorhalterung (11; 54) nach hinten ragt, und
wobei ein unterer linker Abschnitt des Wechselrichters (14; 55, 64) an dem ersten Wechselrichter-Anbringungsteil (9) angebracht ist, ein unterer rechter Abschnitt des Wechselrichters (14; 55, 64) an dem zweiten Wechselrichter-Anbringungsteil (10) angebracht ist, ein oberer linker Abschnitt des Wechselrichters (14; 55, 64) an dem dritten Wechselrichter-Anbringungsteil (12) angebracht ist und ein oberer rechter Abschnitt des Wechselrichters (14; 55, 64) an dem vierten Wechselrichter-Anbringungsteil (13) angebracht ist.

6. Schiffsantriebsmaschine (1; 41) nach Anspruch 1,
wobei der Motor (3; 52, 62), der Wechselrichter (14; 55, 64) und eine Abdeckung (32; 91), die konfiguriert ist, um den Motor (3; 52, 62) und den Wechselrichter (14; 55, 64) abzudecken, in einem oberen Abschnitt der Schiffsantriebsmaschine (1; 41) bereitgestellt sind,
wobei die Abdeckung (32; 91) ein unteres Abdeckungsteil (33) und ein oberes Abdeckungsteil (34; 92) umfasst, und
wobei das untere Abdeckungsteil (33) konfiguriert ist, um einen unteren Abschnitt des Motors (3; 52) und einen unteren Abschnitt des Wechselrichters (14; 55) abzudecken, das obere Abdeckungsteil (34; 92) konfiguriert ist, um einen oberen Abschnitt des Motors (3; 52) und einen oberen Abschnitt des Wechselrichters (14; 55) abzudecken, das obere Abdeckungsteil (34; 92) in Bezug auf das untere Abdeckungsteil (33) anbringbar und abnehmbar ist, und von einer Seite der Schiffsantriebsmaschine (1; 41) aus betrachtet eine obere Endfläche des unteren Abdeckungsteils (33) sich zwischen einer unteren Endfläche des Wechselrichters (14; 55) und einer oberen Endfläche des Wechselrichters (14; 55) erstreckt.

7. Schiffsantriebsmaschine (1; 41) nach Anspruch 6, wobei die obere Endfläche des unteren Abdeckungsteils (33) derart geneigt ist, dass ein hinterer Abschnitt davon niedriger als ein vorderer Abschnitt der oberen Endfläche davon ist.

8. Schiffsantriebsmaschine (41) nach Anspruch 1, umfassend eine erste Motoreinheit (51) und eine zweite Motoreinheit (61), wobei sowohl die erste Motoreinheit (51) als auch die zweite Motoreinheit (61) den Motor (52, 62) und den Wechselrichter (55, 64) umfasst, die durch die untere Motorhalterung (8, 63) des Motors (52, 62) und die obere Motorhalterung (11, 54) des Motors (52, 62) gestützt werden,
wobei die zweite Motoreinheit (61) über der ersten Motoreinheit (51) angeordnet ist, und
wobei die zweite Motoreinheit (61) durch die erste Motoreinheit (51) gestützt wird, indem die obere Motorhalterung (54) des Motors (52) in der ersten Motoreinheit (51) und die untere Motorhalterung (63) des Motors (62) in der zweiten Motoreinheit (61) verbunden werden.

## Revendications

1. Machine de propulsion de navire (1 ; 41) comprenant :
un moteur (3 ; 52, 62) ;
un onduleur (14 ; 55, 64) configuré pour générer un courant d'entraînement pour commander l'entraînement du moteur (3 ; 52, 62) ;
une hélice (25) ; et
un mécanisme de transmission de puissance (26, 27, 28) configuré pour transmettre la puissance du moteur (3 ; 52, 62) à l'hélice (25),
dans laquelle le moteur (3 ; 52, 62) comprend :
un arbre moteur (4 ; 53) ;
un rotor (5) ;
un stator (6) ;
un logement de moteur (7) dans lequel sont logés l'arbre moteur (4 ; 53), le rotor (5) et le stator (6) ;
un support moteur inférieur (8 ; 63) auquel est fixée une partie inférieure du logement de moteur (7) ; et
un support moteur supérieur (11 ; 54) auquel est fixée une partie supérieure du logement de moteur (7), et
dans laquelle une partie inférieure de l'onduleur (14 ; 55, 64) est fixée au support moteur inférieur (8 ; 63), et une partie supérieure de l'onduleur (14 ; 55, 64) est fixée au support moteur supérieur (11 ; 54).

2. Machine de propulsion de navire (1 ; 41) selon la revendication 1, dans laquelle chacune d'une partie gauche de l'onduleur (14 ; 55, 64) et d'une partie droite de l'onduleur (14 ; 55, 64) est fixée au support moteur inférieur (8 ; 63).

3. Machine de propulsion de navire (1 ; 41) selon la revendication 1, dans laquelle chacune d'une partie gauche de l'onduleur (14 ; 55, 64) et d'une partie droite de l'onduleur (14 ; 55, 64) est fixée au support moteur supérieur (11 ; 54).

4. Machine de propulsion de navire (1 ; 41) selon la revendication 1, dans laquelle l'onduleur (14 ; 55, 64) est fixé à une partie arrière de chacun du support moteur inférieur (8 ; 63) et du support moteur supérieur (11 ; 54).

5. Machine de propulsion de navire (1 ; 41) selon la revendication 1,
dans laquelle le support moteur inférieur (8 ; 63) comprend :
une première pièce de fixation d'onduleur (9) faisant saillie vers l'arrière à partir d'une partie arrière gauche du support moteur inférieur (8 ; 63) ; et
une deuxième pièce de fixation d'onduleur (10) faisant saillie vers l'arrière à partir d'une partie arrière droite du support moteur inférieur (8 ; 63),
dans laquelle le support moteur supérieur (11 ; 54) comprend :
une troisième pièce de fixation d'onduleur (12) faisant saillie vers l'arrière à partir d'une partie arrière gauche du support moteur supérieur (11 ; 54) ; et
une quatrième pièce de fixation d'onduleur (13) faisant saillie vers l'arrière à partir d'une partie arrière droite du support moteur supérieur (11 ; 54), et
dans laquelle une partie gauche inférieure de l'onduleur (14 ; 55, 64) est fixée à la première pièce de fixation d'onduleur (9), une partie droite inférieure de l'onduleur (14 ; 55, 64) est fixée à la deuxième pièce de fixation d'onduleur (10), une partie gauche supérieure de l'onduleur (14 ; 55, 64) est fixée à la troisième pièce de fixation d'onduleur (12), et une partie droite supérieure de l'onduleur (14 ; 55, 64) est fixée à la quatrième pièce de fixation d'onduleur (13).

6. Machine de propulsion de navire (1 ; 41) selon la revendication 1,
dans laquelle le moteur (3 ; 52, 62), l'onduleur (14 ; 55, 64) et un couvercle (32 ; 91) configuré pour recouvrir le moteur (3 ; 52, 62) et l'onduleur (14 ; 55, 64) sont disposés dans une partie supérieure de la machine de propulsion de navire (1 ; 41),
dans laquelle le couvercle (32 ; 91) comprend une partie de couvercle inférieure (33) et une partie de couvercle supérieure (34 ; 92), et
dans laquelle la partie de couvercle inférieure (33) est configurée pour recouvrir une partie inférieure du moteur (3 ; 52) et une partie inférieure de l'onduleur (14 ; 55), la partie de couvercle supérieure (34 ; 92) est configurée pour recouvrir une partie supérieure du moteur (3 ; 52) et une partie supérieure de l'onduleur (14 ; 55), la partie de couvercle supérieure (34 ; 92) peut être fixée et détachée par rapport à la partie de couvercle inférieure (33), et lorsqu'elle est vue depuis un côté de la machine de propulsion de navire (1 ; 41), une surface d'extrémité supérieure de la partie de couvercle inférieure (33) s'étend entre une surface d'extrémité inférieure de l'onduleur (14 ; 55) et une surface d'extrémité supérieure de l'onduleur (14 ; 55).

7. Machine de propulsion de navire (1 ; 41) selon la revendication 6, dans laquelle la surface d'extrémité supérieure de la partie de couvercle inférieure (33) est inclinée de telle sorte qu'une partie arrière de celle-ci est plus basse qu'une partie avant de la surface d'extrémité supérieure de celle-ci.

8. Machine de propulsion de navire (41) selon la revendication 1, comprenant un premier groupe moteur (51) et un second groupe moteur (61), chacun du premier groupe moteur (51) et du second groupe moteur (61) comprenant le moteur (52, 62) et l'onduleur (55, 64) supportés par le support moteur inférieur (8, 63) du moteur (52, 62) et le support moteur supérieur (11, 54) du moteur (52, 62),
dans laquelle le second groupe moteur (61) est agencé au-dessus du premier groupe moteur (51), et
dans laquelle le second groupe moteur (61) est supporté par le premier groupe moteur (51) en reliant le support moteur supérieur (54) du moteur (52) dans le premier groupe moteur (51) et le support moteur inférieur (63) du moteur (62) dans le second groupe moteur (61).
